# EUROPEAN PATENT SPECIFICATION

(11) **EP 2 143 539 B1**
(45) Date of publication and mention of the grant of the patent: **11.11.2015**
(21) Application number: 08388025.2
(22) Date of filing: 10.07.2008
(51) Int. Cl.: F16L 59/14, B29C 44/32, B29L 23/00

(54) **Method of manufacturing a preinsulated pipe and production line**
Verfahren zur Herstellung eines gedämmten Rohres und Produktionsanlage
Procédé de fabrication d'un tube insolé et ligne de production

(43) Date of publication of application: 13.01.2010
(73) Proprietor: Logstor A/S, 9670 Løgstør (DK)
(72) Inventor: Pedersen, Martin, 7742 Veslos (DK); Thomsen, Tina, 9670 Logstor (DK); Brønnum, Thomas, 7000 Fredericia (DK)
(74) Representative: Zacco Denmark A/S

(56) References cited:
- GB-A- 1 246 940
- GB-A- 1 277 865
- US-A- 3 325 573
- US-A1- 2006 032 588

## Description

### FIELD OF THE INVENTION

The present invention relates to a production line and an improved manufacture method of preinsulated pipes by means of a continuous process. The step of adding the insulation material in a liquid state between the mould and the inner pipe comprises positioning the liquid insulation material in the vicinity of the inner pipe, whereby the material surrounds the inner pipe at an early development stage. This can be obtained by the use of an elevated plate arrangement.

### BACKGROUND OF THE INVENTION

For district heating and cooling solutions in e.g. the oil and gas sector and for industry insulation, preinsulated pipes are widely used. An assembly of a preinsulated pipe typically comprises one or more inner pipes of either metal or plastic, an insulation layer such as polyurethane foam and a casing pipe of metal or plastic. Preinsulated pipes that are continuously manufactured can further comprise a diffusion barrier in the form of e.g. a film or foil arranged between the insulation layer and the casing material.

The position of the inner pipes (also referred to as service pipes) relative to for example the casing or centre lines is very important when installing the preinsulated pipes, as the free end of the inner pipes must be welded together or joined otherwise. Preinsulated pipes with very diverging positions of the inner pipes can therefore lead to undesired stresses and tension in the assembled preinsulated pipes and increased installation costs. To avoid this, the position of the inner pipes relative to the preinsulated pipes as a whole, is agreed by the parties or follows the specifications in international and national standards. Such standards normally vary depending on e.g. the application field.

When two or more inner pipes are used, a further requirement must be fulfilled. This relates to the twisting of the inner pipes, which must be held within a certain tolerance range. Twisting concerns the position of the inner pipes in one end of the preinsulated pipe relative to the position in the other end of the same preinsulated pipe. Twisting can also concern the position of the inner pipes in one end of the preinsulated pipes relative to any position along the preinsulated pipe. This requirement is particular relevant when the preinsulated pipes are cut during installation.

A widespread way of manufacturing preinsulated pipes using a continuous process proceeds as follows: The liquid polyurethane foam mixture is poured on an endless sheet, such as plastic film or foil, arranged on the bottom of O-shaped moulds. The sheet is moved forward by the moulds with a certain velocity. The polyurethane foam mixture expands and gradually fills the gap between the inner pipes fed continuously into the moulds at a velocity corresponding to the velocity of the sheet. After full expansion of the liquid polyurethane foam mixture, it cures inside the moulds. Subsequently, the insulated inner pipes exit the moulds and enter a station where a plastic casing can be extruded onto the insulation material. Finally, the preinsulated pipes are cut and divided into desired lengths.

During the expansion of the polyurethane foam mixture, the viscosity steadily increases from approximately 200-400mPa·s at 25 °C to higher viscosity and finally to a solid state, where the foam cures. The distribution of the polyurethane foam mixture on the endless sheet arranged on the bottom of the mould is rarely completely even; hence the front(s) of the foam do not reach the inner pipes exactly at the same time. Since the viscosity of the foam is relatively high at that point of time, this can cause displacement of the inner pipes from their intended position. This may lead to an undesired position of single inner pipes relative to e.g. the casing. In the case of preinsulated pipes with two or more inner pipes, this might lead to the undesired twisting described above.

US 2006/0032588 describes a traditional manufacturing process of a preinsulated pipe, where the mentioned problem of decentralization of the inner pipe relative to the outer casing is attempted eliminated by having a starter ring and ending ring at each end of the of the preinsulated pipe during manufacturing. These rings, however, only ensure that the inner pipe is centered relative to the casing in the respective ends of the preinsulated pipe. The manufacturing process of these preinsulated pipes is very cumbersome and labor intensive in that these rings have to be mounted manually for each piece of inner pipe. Further, the manufacturing process is designed such that the liquid insulation material is poured onto the inner pipe of which an arbitrary amount lands on a sheet or foil also directed into the mould. This gives an arbitrary expansion of the liquid insulation material which can cause the mentioned undesired displacement of the inner pipe. Thus, along the course of the preinsulated pipe, the inner pipe will be decentralized relative to the outer casing, although not in the respective ends. This means that the desired geometry is only present in the ends of the preinsulated pipe. If during installation it is required to cut this preinsulated pipe, the position of the inner pipe relative to the casing will not be as desired. In addition, the inner pipe of this preinsulated pipe will have built in stresses caused by the displacement. Such stresses can complicate the installation process of this preinsulated pipe.

The problem of a decentralized inner pipe relative to the casing is in GB 1277865 solved by winding a spiral spacer (e.g. a paper cord) around the copper inner pipe which in a preceding step has been wrapped in a paper sheet. However, this leads to an inhomogeneous insulation layer and hence, reduced thermal insulation performance. Further, this method will not apply on a preinsulated pipe comprising two or more inner pipes.

### OBJECT AND SUMMARY OF THE INVENTION

The objective of the present invention is to solve the above mentioned problems.

This is obtained by providing a production line according to claim 6 and a method of manufacturing a preinsulated pipe according to claim 1. The advantage of this is that the inner pipe is enclosed by the insulation material much earlier compared to the prior art. This is especially advantageous in the continuous manufacture of preinsulated pipes with at least two inner pipes, as the insulation material expands from the centre of the preinsulated pipes and out against the walls of the mould. Thus, the inner pipes, which can be considered as an obstacle to the expansion of insulation material, are enclosed at a very early stage in the development of the insulation material from liquid to solidification. Further, as the insulation material passes the inner pipes at this stage, the foam is distributed much more homogeneously. This is advantageous as the homogeneous distribution leads to an even solidification of the insulation material, which has a minimum impact on the displacement of the inner pipe.

The insulation material is added in a liquid state on a sheet positioned in the vicinity of the inner pipe. This is advantageous as the insulation material can be led more easily into the mould together with the inner pipe.

In a further embodiment of the present invention, the sheet is endless. This is an advantage as this simplifies the manufacturing process, compared to feeding single sheets into the mould.

The development of stages of the insulation material moves the sheet towards the walls of the mould. Here the advantages are as described above.

The sheet is placed on a slope. The advantage of this embodiment is that the sheet is supported whereby the sheet does not have to carry the load of the insulation material alone. Thus, this is conducive for the desired distribution of insulation material.

The slope is placed in the entering end of the mould. This is advantageous as it is here the insulation material is introduced into the mould.

The slope comprises side walls. The advantage of this is that the walls can assist in obtaining a desired development of the insulation material.

In another embodiment of the present invention, the slope comprises a horizontal portion perpendicular to the slopping direction of the sloped surface. Here the advantages are as described above.

In a further embodiment of the present invention, the method comprises an additional sheet directed into the mould at the bottom of the mould: This is advantageous as it is easier to feed a sheet close to the inner pipe that has a smaller width than the circumference of the inside of the mould.

The slope has its highest point at the entering end of the mould. Here the advantages are as described above.

### BRIEF DESCRIPTION OF THE DRAWINGS

In the following, preferred embodiments of the invention will be described referring to the figures, where
figure 1 illustrates a sectional view of a prior art preinsulated pipe with a single inner pipe, where the inner pipe exceeds a given tolerance range;
figure 2 illustrates a sectional view of a prior art preinsulated pipe with two service pipes where the twisting tolerance for the upper inner pipe is indicated;
figure 3 illustrates a prior art principal sketch of a production line for manufacturing preinsulated pipes according to a continuous process comprising one or more inner pipes;
figure 4 illustrates a perspective of the elevated plate arrangement;
figure 5 illustrates a side view of the elevated plate arrangement and four cross sections along the course of the same;
figure 6 illustrates a cross sectional view of the production of a preinsulated pipe with a single inner pipe, where two sheets are used;
figure 7 illustrates a cross sectional view of the production of a preinsulated pipe with two inner pipes, where two sheets are used;
figure 8 illustrates a cross sectional view of the production of a preinsulated pipe with two inner pipes, where one sheet is used;
figure 9a-d illustrate four cross sectional views during the manufacture of a preinsulated pipe with two inner pipes along the course of the elevated plate arrangement.

### DESCRIPTION OF EMBODIMENTS

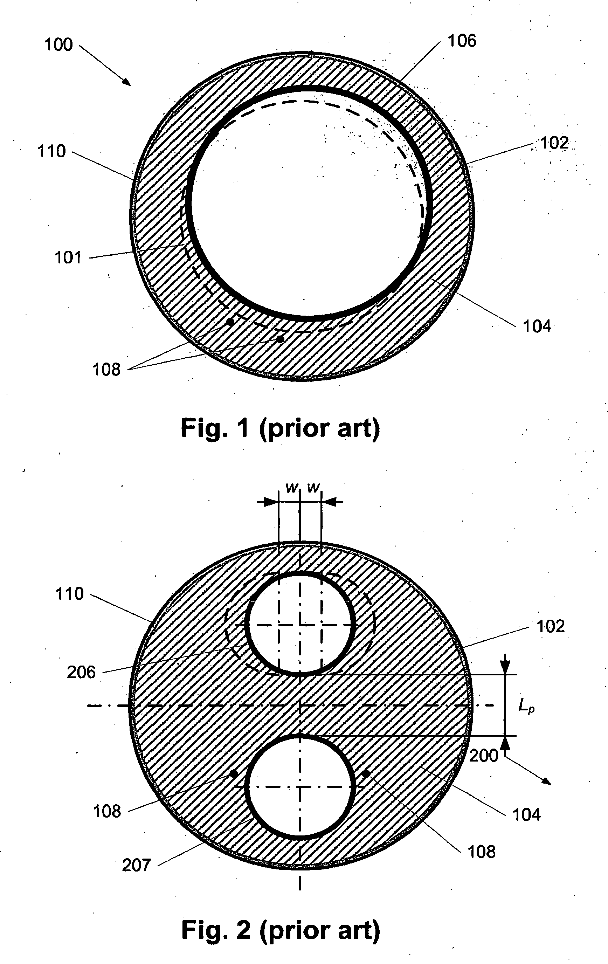

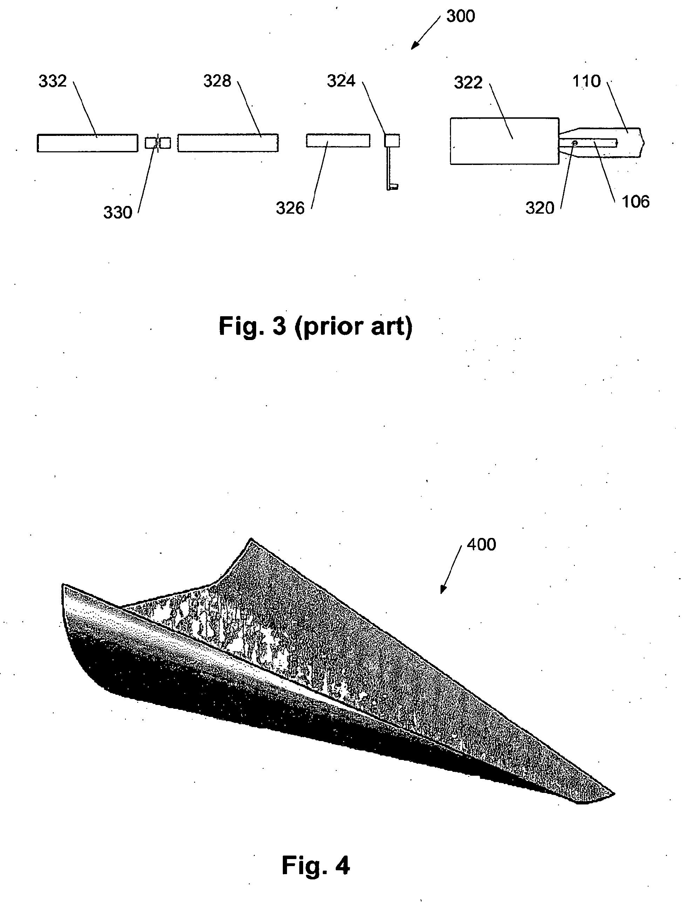

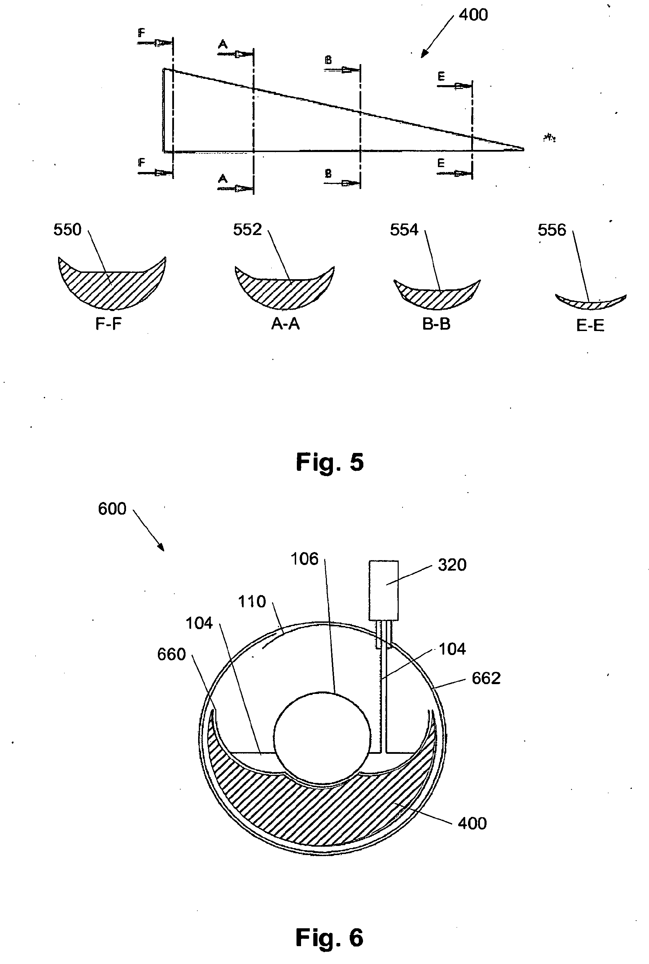

Figure 1 illustrates a sectional view of a prior art preinsulated pipe 100 manufactured according to a continuous process with a single inner pipe 106, where the inner pipe 106 exceeds a given tolerance range indicated by the dotted circle 101. The preinsulated pipe comprises the mentioned inner pipe 106 (also called service pipe), insulation material 104 such as polyurethane foam (PUR), alarm wire 108, primary sheet 110 and a casing 102, such as an extruded plastic casing. Due to inaccuracies in the production of the preinsulated pipe 100 according to a continuous process, the inner pipe 106 exceeds the tolerances for the position of the inner pipe 106 relative to the casing 102. The problem with this is, as initially stated, that the preinsulated pipes 100 are difficult to install due to the gap size between adjacent inner pipes 106 to be joined. Welding these together can in addition cause undesired stress or tension in the preinsulated pipes 100. The width of the primary sheet 110 must at least correspond to the inner circumference of the mould (see figures 6-9). If the width of the primary sheet 110 is greater than this circumference, the primary sheet 110 will have an overlap against the inner wall of the casing 102. The function of the primary sheet 110 is described in figure 3. The alarm wire 108 can be used to detect leakage in an installed pipe system. The alarm wire is optional.

Figure 2 illustrates a sectional view of a prior art preinsulated pipe 200 manufactured according to a continuous process with two inner pipes 206, 207 where the twisting tolerance for the upper inner pipe 206 is indicated. The preinsulated pipe 200 comprises two inner pipes 206, 207, insulation material 104 such as polyurethane foam (PUR), alarm wire 108, primary sheet 110 and a casing 102, such as a an extruded plastic casing. The twisting tolerance w denotes the allowed horizontal displacement as indicated on the figure. It must be noted that the tolerance w is only a horizontal tolerance when the preinsulated pipe is orientated as indicated on the figure. Complying with the twisting tolerances w can be a requirement only at only each end of the preinsulated pipe 200, but where the preinsulated pipes 200 are cut during installation, this can be a requirement along the entire length thereof. A further requirement is the distance between the two inner pipes 206, 207.

Figure 3 illustrates a prior art principal sketch of a production line for manufacturing preinsulated pipes 100 according to a continuous process, where the preinsulated pipes comprise one inner pipe. The production line could, however, with minor adjustments also be used to manufacture preinsulated pipes with two or more inner pipes. The production line comprises an inner pipe feeder (not shown), a sheet dispenser (not shown), a moulding station 322, an extruder 324, a cooling unit 326, 328, a cutting unit 330 and pipe transportations means 332. At the inner pipe feeder, the inner pipes 106 are arranged and put together by a distance piece (not shown) and then fed into the moulding station 322. The inner pipe 106 is led into an open circular mould (not shown) of the moulding station 322 together with a primary sheet 110. The primary sheet 110 can e.g. be a plastic sheet, which can comprise several layers conducive for the desired properties of the final preinsulated pipe 100. The primary sheet 110 is typically an endless sheet and must have a width corresponding to at least the inner circumference of the mould of the moulding station 322 and is led into the mould at the bottom of this. In this entering end of the moulding station 322, an insulation material dispenser 320 injects liquid insulation material (not shown) such as polyurethane foam (PUR) on the primary sheet 110 moving into the mould. The primary sheet 110 is used so as to avoid that the insulation material gets stuck to the wall of the mould, which could cause undesired problems with the continuity of the production of these preinsulated pipes 100. In the case of manufacturing preinsulated pipes 100 with a single inner pipe 106, the liquid insulation material is typically directed at one side of the inner pipe 106 (also illustrated at e.g. figure 6), that is between the inner pipe 106 and the mould (not shown) along the primary sheet. In the case of a preinsulated pipe 200 with two inner pipes 206, 207 the liquid insulation material can be dispensed between these, such that it lands on bottom of the mould whereon the primary sheet 110 moves. The inner pipe 106 and the primary sheet 110 are moved into the mould of the moulding station 322 at the same velocity. The liquid insulation material dispensed into the mould lands on the bottom of the primary sheet, and as it moves into the mould it becomes expanding foam, which gradually supports and surrounds the inner pipe 106 and eventually fills out the entire mould. In most cases the distribution of the foam or mixture on the bottom part of the mould is not completely even, which means that the foam front(s) do not reach the inner pipe 106 exactly at the same time, which in combination with the relatively high viscosity of the foam at that point of time can cause displacement of the inner pipe 106 from its intended position. This leads to a displacement relative to the casing 102 of a preinsulated pipe 100 with a single inner pipe 106, see figure 1. In the case of a preinsulated pipe 200 with two inner pipes 206, 207 this can lead e.g. to twisting of the inner pipes 206, 207, see figure 2. When the insulated inner pipe 106 leaves the moulding station 322, the insulation material 104 has gone through a number of consecutive development stages. The insulation material 104 can be a mixture of different substances. The development stages in the foaming process of the insulation material has a number of characteristic stages, with the start of the mixing set at zero, referred to as cream stage, then a string or gel stage, then a tack-free stage and finally an end-of-rise stage. The cream stage is when the mix starts to foam. The string or gel stage is when strings of polymer can be withdrawn by dipping a pointer into the foam mix. The tack-free stage is when the surface of the foam stops being tacky to touch. Finally, the end-of-rise stage is when the point of maximum height is reached. Hereafter the insulation material 104 cures inside the mould of the moulding station which comprises heating means such that the temperature of the mould is set at a temperature conducive to the curing process. Then the insulated inner pipe leaves the moulding station 322. Hereafter the casing 102 of the preinsulated pipe 100 is extruded on the insulated inner pipe 106 at the extruder 324. Then the preinsulated pipe 100 is cooled at the cooling unit 326, 328, and subsequently cut in a desired length at cutting unit 330. The preinsulated pipes are normally cut where the distance piece between two successive inner pipes 106 is installed. Finally, the finished preinsulated pipes 100 leave the production line at a station comprising pipe transportations means 332.

Figure 4 illustrates a perspective of an elevated plate arrangement 400. The elevated plate arrangement 400 resembles a slide elevating from approximately zero height in one end to a greater height at the other. The elevated plate arrangement 400 is placed in the mould of a moulding station and arranged such that the high end of the elevated plate is placed in or at the entering end of the mould. This means that the elevated plate has a downward slope into the mould. The top of the mould is placed close to the point where the inner pipe enters the mould. The reasoning of this is explained in the following figures.

Figure 5 illustrates a side view of the elevated plate arrangement 400 and four cross sections along the course of the same. The descending height of the elevated plate arrangement can be seen in the cross sections 550 (F-F), 552 (A-A), 554 (B-B), 556 (E-E). These cross sectional views also illustrate how the (side) walls of the elevated plate arrangement 400 decrease along with the descending height of the same. The elevated plate 400 can be shaped differently according to e.g. the characteristics of the insulation material which is to be directed onto the slope of the elevated plate arrangement 400.

Figure 6 illustrates a cross sectional view 600 of the production of a preinsulated pipe with a single inner pipe 106, where two sheets 110, 660 are used. The production of the preinsulated pipe 100 resembles the manufacturing process described in figure 3 and further comprises an elevated plate arrangement 400 with a different design compared to the one described in figures 4 and 5. That is, here the elevated plate arrangement 400 is adapted to the geometry of the single inner pipe 106. Therefore, apart from the elevated plate arrangement 400 and the secondary sheet 660, the production of the preinsulated pipe 100 resembles the one described in figure 3. The secondary sheet 660 is directed into the mould 662 at the top of the elevated plate arrangement 400 and the primary sheet 110 beneath the elevated plate arrangement 400 along the mould 662. For illustrative purposes only, the wall of the mould 662 facing the inner pipe 106 is shown. When the liquid insulation material 104 is directed into the mould 662, it lands on the secondary sheet 660 and expands from there. Since the inner pipe 106 and the elevated plate arrangement 400 are relatively close to each other at the entering end of the mould 662, the expanding insulation material is almost immediately brought into contact with the inner pipe 106, i.e. at a point of time where the viscosity of the foam 104 is still very low, and hence the impact on the displacement of the inner pipe 106 is also very low. The elevated plate arrangement 400 has a slope and ends before the foam 104 is fully expanded and closes the gap between the inner pipe 106 and the walls of the mould 662 between which the primary sheet 110 is positioned. The elevated plate arrangement 400 may have several inclination points and may be adjustable in height and length to accommodate variations in foam reactivity.

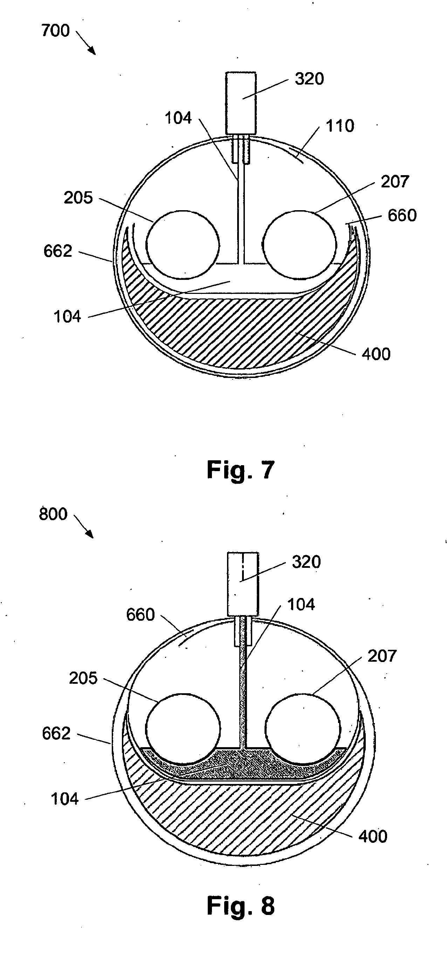

Figure 7 illustrates a cross sectional view of the production of a preinsulated pipe 200 according to a continuous process with two inner pipes 206, 207, where two sheets 110, 660 are used. The production of the preinsulated pipe 200 further comprises an elevated plate arrangement 400. Apart from the elevated plate arrangement 400 and the secondary sheet 660, the production of the preinsulated pipe 100 resembles the one described in figure 3. The secondary sheet 660 is directed into the mould 662 at the top of the elevated plate arrangement 400 and the primary sheet 110 beneath the elevated plate arrangement 400. When the liquid insulation material 104 is directed into the mould 662 it lands on the secondary sheet 660 and expands from there. Since the inner pipes 206, 207 and the elevated plate arrangement 400 are relatively close to each other at the entering end of the mould 662, the expanding foam is almost immediately brought into contact with the inner pipes 206, 207, i.e. at a point of time where the viscosity of the foam 104 is still very low, and hence the impact on the displacement of the inner pipes 206, 207 is also very low. The elevated plate arrangement 400 further has a horizontal part which provides an even distribution of the liquid insulation material 104 and subsequently an even expansion thereof. The elevated plate arrangement 400 has a slope and ends before the insulation material 104 is fully expanded and closes the gap between the inner pipes 206, 207 and the walls of the mould 662. The elevated plate arrangement 400 may have several inclination points and may be adjustable in height and length to accommodate variations in the foam 104 reactivity.

Figure 8 illustrates a cross sectional view of the production of a preinsulated pipe 200 according to a continuous process with two inner pipes 206, 207, where only one secondary sheet 660 is used. Here the width of the secondary sheet 660 is larger than the secondary sheet in figure 7. The larger width ensures that the insulation material 104 does not adhere to the wall of the mould 662. Thus, the secondary sheet 660 must in this setting have a width which is at least equal to the circumference of the inside of the mould 662. The production of the preinsulated pipe 200 further comprises an elevated plate arrangement 400. Apart from the elevated plate arrangement 400 and the secondary sheet 660, the production of the preinsulated pipe 100 resembles the one described in figure 3 - although, in this particular setting, the primary sheet 110 is omitted. The secondary sheet 660 is directed into the mould 662 at the top of the elevated plate arrangement 400, which is arranged at the entering end of the mould 662. When the liquid insulation material 104 is directed into the mould 662, it lands on the secondary sheet 660 and expands from there. Since the inner pipes 206, 207 and the elevated plate arrangement 400 are relatively close to each other at the entering end of the mould 662, the expanding insulation material 104 is almost immediately brought into contact with the inner pipes 206, 207, i.e. at a point of time where the viscosity of the foam 104 is still very low, and hence the impact on the displacement of the inner pipes 206, 207 is also very low. The elevated plate arrangement 400 further has a horizontal part which provides an even distribution of the liquid insulation material 104 and an even expansion thereof. The slope of the elevated plate arrangement 400 ends (not shown) inside the mould 662 before the insulation material 104 is fully expanded and closes the gap between the inner pipes 206, 207 and the walls of the mould 662. The elevated plate arrangement 400 may have several inclination points and may be adjustable in height and length to accommodate variations in the foam 104 reactivity.

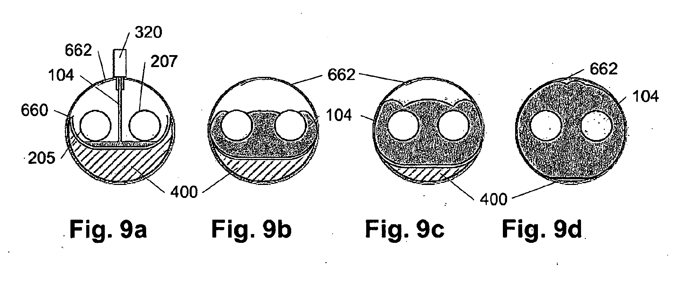

Figure 9a-d illustrate four cross sectional views during the manufacture of a preinsulated pipe with two inner pipes 206, 207 along the course of the elevated plate arrangement 400. In figure 9a the liquid foam 104 is directed into the mould 662 between the two inner pipes 206, 207. As the secondary sheet 660 and the inner pipes 206, 207 are moved forward in mould 662 along the descending elevated plate arrangement 400, the foam 104 gradually expands (figure 9b) and surrounds (figure 9b) the inner pipes 206, 207, and eventually the foam 104 fills out the majority of the mould 662 (figure 9d). As illustrated, this elevated plate arrangement 400 provides an even distribution of foam liquid 104, a fast contact with the inner pipes 206, 207, and hence less impact on the displacement and, due to the vertical expansion in both upward and downward direction, a better density and material property distribution of the foam 104. As it is common practice, alarm wires 108 may be fed in continuously parallel to the inner pipes 206, 207 at any point above the elevated plate arrangement 400.

A common advantage of the embodiments described in figures 6-9 is the faster enclosure of the inner pipe. This is especially advantageous in the continuous manufacture of preinsulated pipes with at least two inner pipes, as the insulation material expands from the centre of the preinsulated pipes and out against the walls of the mould. Thus, the inner pipes, which can be considered as an obstacle to the expansion of insulation material, are surrounded at a very early stage in the development of the insulation material compared to the prior art. This because the insulation material foam expands from the center of the preinsulated pipe and not from the bottom of the mould as it is the case with the prior art. Further, as the insulation material passes the inner pipes at this stage the foam is distributed much more homogeneously compared to prior art. This leads to another advantage of the present invention, as the homogeneous distribution leads to an even solidification of the insulation material having a minimum impact on the displacement of the inner pipes. Manufacture of preinsulated pipes according to the present invention using an elevated plate arrangement is schematically illustrated in the table below:

| **Time (example)** | **Foam development** | **Physical event** | **Continuous process** |
|---|---|---|---|
| 0 seconds | | Raw material mixing | Liquid lay down on carrier sheet |
| 5 seconds | Cream, initial rise | Froth formation | |
| >5 - < 60 seconds | Rising foam | Viscosity increase, bubble expansion | Foam surrounds the inner pipe(s) |
| | | | Foam has completely filled the gap between the inner pipe(s) and the mould walls |
| 40 seconds | | Foam gels | Temperature and pressure inside the cells increase |
| 50 seconds | | Foam becomes tack free | |
| 60 seconds | End-of-rise | Foam becomes solid | |
| > 60 seconds | Cure | Hardness development | |
| 180 seconds | | | Pipe assembly leaves the mould sections |
| > 180 seconds | | | Extrusion of casing and cutting |

### REFERENCES

- 100: preinsulated pipe with a single inner pipe
- 101: dotted circle for max. tolerance
- 102: casing
- 104: insulation material (liquid as well as solidified state)
- 106: inner pipe
- 108: alarm wire
- 110: primary sheet
- 200: preinsulated pipe with two inner pipes
- 206: inner pipe
- 207: inner pipe
- 300: production line for the manufacture of preinsulated pipes
- 320: foam dispenser
- 322: moulding station
- 324: extruder
- 326: cooling station
- 328: cooling station
- 330: cutting station
- 332: pipe transportation means
- 400: elevated plate arrangement, sloped surface
- 550: cross section of the elevated plate arrangement
- 552: cross section of the elevated plate arrangement
- 554: cross section of the elevated plate arrangement
- 556: cross section of the elevated plate arrangement
- 600: cross sectional of the production of a preinsulated pipe with a single inner pipe using two sheets
- 660: secondary sheet
- 662: mould wall of the moulding station
- 700: cross sectional of the production of a preinsulated pipe with a two inner pipes using two sheets
- 800: cross sectional of the production of a preinsulated pipe with a two inner pipes using two sheets

## Claims

1. A method of manufacturing a preinsulated pipe (100, 200), said preinsulated pipe (100, 200) comprising at least one inner pipe (106, 206, 207) surrounded by insulation material (140) and a casing (102), the insulation material (140) being positioned between the at least one inner pipe (106, 206) and the casing (102), said method of manufacturing said preinsulated pipe (100, 200) comprising the steps of adding said insulation material (104) in a liquid state between a mould and said inner pipe (106, 206, 207) onto a sheet (660) directed into said mould, and directing said inner pipe (106, 206, 207) into said mould and letting said insulation material expand and solidify wherein said step of adding said insulation material in a liquid state between said mould and said inner pipe comprises positioning said liquid insulation material in the vicinity of said inner pipe, whereby said insulation material surrounds said inner pipe at an early development stage, **characterized in that** said sheet (660) on which said insulation material (104) is added moves along an elevated plate arrangement (400) placed in said mould of the moulding station, the elevated plate having a downward slope into the mould arranged such that the high end of the elevated plate is placed in or at the entering end of the mould, wherein said elevated plate arrangement (400) comprises side walls.

2. A method of manufacturing a preinsulated pipe (100,200) according to claim 1, wherein said at least one inner pipe (106,206,207) is directed into said mould above said elevated plate (400).

3. A method of manufacturing a preinsulated pipe (100, 200) according to claims 1-2, wherein said sheet (660) is endless.

4. A method of manufacturing a preinsulated pipe (100,200) according to any preceding claim, wherein said method comprises the step of directing an additional sheet (110) into said mould below said elevated plate (400).

5. A method of manufacturing a preinsulated pipe according to any preceding claim, where said elevated plate arrangement (400) comprises a horizontal part which provides an even distribution of the insulation material (104) in the liquid state and subsequently an even expansion thereof.

6. A production line for manufacturing a preinsulated pipe (100,200) with at least one inner pipe (106,206,207) surrounded by insulation material (140) and a casing (102), the insulation material (140) being positioned between the at least one inner pipe (106, 206) and the casing (102), the production line comprising an inner pipe feeder, a sheet dispenser, a moulding station (322) with a mould, an extruder (324), a cooling unit (326, 328), a cutting unit and pipe transportation means (332) and a dispenser (320) for dispensing insulation material (104) in a liquid state, **characterized in that** said production line further comprises an elevated plate arrangement (400) placed in the mould of a moulding station, wherein the elevated plate has a downward slope into the mould and is arranged such that the high end of the elevated plate arrangement is placed in or at the entering end of the mould, wherein said elevated plate arrangement (400) comprises side walls.

7. A production line according to any of claim 6, wherein said elevated plate arrangement (400) comprises a horizontal part which provides an even distribution of the insulation material (104) in the liquid state and subsequently an even expansion thereof.

## Patentansprüche

1. Verfahren zur Herstellung eines gedämmten Rohres (100, 200), wobei das gedämmte Rohr (100, 200) zumindest ein von Dämmstoff (140) umgebenes Innenrohr (106, 206, 207) und ein Gehäuse (102) umfasst, wobei der Dämmstoff (140) zwischen dem zumindest einen Innenrohr (106, 206) und dem Gehäuse (102) angeordnet ist, wobei das Verfahren zur Herstellung des gedämmten Rohres (100, 200) die folgenden Schritte umfasst: Auftragen des Dämmstoffes (104) in einem flüssigen Zustand zwischen einer Form und dem Innenrohr (106, 206, 207) auf eine in die Form geleitete Platte (660), Leiten des Innenrohrs (106, 206, 207) in die Form und Expandierenlassen und Aushärtenlassen des Dämmstoffs, wobei der Schritt des Auftragens des Dämmstoffes in einem flüssigen Zustand zwischen der Form und dem Innenrohr das Positionieren des flüssigen Dämmstoffes in der Nähe des Innenrohrs umfasst, wodurch der Dämmstoff in einem frühen Entwicklungsstadium das Innenrohr umgibt, **dadurch gekennzeichnet, dass** die Platte (660), auf die der Dämmstoff (104) aufgetragen ist, sich entlang einer erhöhten Plattenanordnung (400) bewegt, die in der Form der Formstation angeordnet ist, wobei die erhöhte Platte ein Gefälle in die Form aufweist, welches derart angeordnet ist, dass das hohe Ende der erhöhten Platte in oder bei dem Eingangsende der Form angeordnet ist, wobei die erhöhte Plattenanordnung (400) Seitenwände aufweist.

2. Verfahren zur Herstellung eines gedämmten Rohres (100, 200) nach Anspruch 1, wobei das zumindest eine Innenrohr (106, 206, 207) in die Form oberhalb der erhöhten Platte (400) geleitet wird.

3. Verfahren zur Herstellung eines gedämmten Innenrohres (100, 200) nach Anspruch 1 bis 2, wobei die Platte (660) endlos ist.

4. Verfahren zur Herstellung eines gedämmten Rohres (100, 200) nach einem vorgehenden Anspruch, wobei das Verfahren den Schritt des Leitens einer zusätzlichen Platte (110) in die Form unterhalb der erhöhten Platte (400) umfasst.

5. Verfahren zur Herstellung eines gedämmten Rohres nach einem vorgehenden Anspruch, wobei die erhöhte Plattenanordnung (400) einen horizontalen Teil aufweist, welcher eine gleichmäßige Verteilung des Dämmstoffes (104) in dem flüssigen Zustand und nachträglich eine gleichmäßige Expansion davon bereitstellt.

6. Produktionsanlage zur Herstellung eines gedämmten Rohres (100, 200) mit zumindest einem von Dämmstoff (140) umgebenen Innenrohr (106, 206, 207) und einem Gehäuse (102), wobei der Dämmstoff (140) zwischen dem zumindest einen Innenrohr (106, 206) und dem Gehäuse (102) angeordnet ist, wobei die Produktionsanlage eine Innenrohrzufuhr, eine Plattenabgabevorrichtung, eine Formgebungsstation (322) mit einer Form, eine Verlängerungsvorrichtung (324), eine Kühleinheit (326, 328), eine Schneidvorrichtung (330) und ein Rohrförderungsmittel (332), und eine Abgabevorrichtung (320) für die Abgabe von Dämmstoff (104) in einem flüssigen Zustand, **dadurch gekennzeichnet, dass** die Produktionsanlage ferner eine erhöhte Plattenanordnung (400) aufweist, die in der Form einer Formstation angeordnet ist, wobei die erhöhte Platte ein Gefälle in die Form aufweist und derart angeordnet ist, dass das hohe Ende der erhöhten Plattenanordnung in oder bei dem Eingangsende der Form angeordnet ist, wobei die erhöhte Plattenanordnung (400) Seitenwände aufweist.

7. Produktionsanlage nach einem der Ansprüche 6, wobei die erhöhte Plattenanordnung (400) einen horizontalen Teil aufweist, welcher eine gleichmäßige Verteilung des Dämmstoffes (104) in dem flüssigen Zustand und nachträglich eine gleichmäßige Expansion davon bereitstellt.

## Revendications

1. Procédé de fabrication d'un tuyau pré-isolé (100, 200), ledit tuyau pré-isolé (100, 200) comprenant au moins un tuyau intérieur (106, 206, 207) entouré d'un matériau d'isolation (140) et un boîtier (102), le matériau d'isolation (140) étant positionné entre l'au moins un tuyau intérieur (106, 206) et le boîtier (102), ledit procédé de fabrication dudit tuyau pré-isolé (100, 200) comprenant les étapes d'addition dudit matériau d'isolation (104) à l'état liquide entre un moule et ledit tuyau intérieur (106, 206, 207) sur une feuille (660) orientée vers ledit moule, et d'orientation dudit tuyau intérieur (106, 206, 207) dans ledit moule et faisant ledit matériau d'isolation s'étendre et se solidifier, ladite étape d'addition dudit matériau d'isolation à l'état liquide entre ledit moule et ledit tuyau intérieur comprenant le positionnement dudit matériau d'isolation liquide au voisinage dudit tuyau intérieur, ledit matériau d'isolation entourant ledit tuyau intérieur à un stade de développement précoce, **caractérisé en ce que** ladite feuille (660) sur laquelle ledit matériau d'isolation (104) est ajoutée se déplace le long d'un dispositif de plaque élevée (400) placé dans ledit moule de la station de moule, la plaque élevée ayant une pente dirigée vers le bas dans le moule et arrangée si bien que l'extrémité haute de la plaque élevée est placée dans ou au niveau de l'extrémité d'entrée du moule, le dispositif de plaque élevée (400) comprenant des parois latérales.

2. Procédé de fabrication d'un tuyau pré-isolé (100,200) selon la revendication 1, dans lequel l'au moins un tuyau intérieur (106,206,207) est dirigé dans ledit moule au-dessus de ladite plaque élevée (400).

3. Procédé de fabrication d'un tuyau pré-isolé (100, 200) selon les revendications 1 à 2, dans lequel ladite feuille (660) est sans fin.

4. Procédé de fabrication d'un tuyau pré-isolé (100,200) selon l'une quelconque des revendications précédentes, dans lequel le procédé comprend l'étape de direction d'une feuille supplémentaire (110) dans ledit moule au-dessous de ladite plaque élevée (400).

5. Procédé de fabrication d'un tuyau pré-isolé selon l'une quelconque des revendications précédentes, dans lequel ledit dispositif de plaque élevée (400) comprend une partie horizontale qui fournit une distribution régulière du matériau d'isolation (104) à l'état liquide et ensuite une expansion régulière de celui-ci.

6. Chaîne de fabrication pour produire un tuyau pré-isolé (100,200) avec au moins un tuyau intérieur (106,206,207) entoure par un matériau d'isolation (140) et un boîtier (102), le matériau d'isolation (140) étant positionné entre l'au moins un tuyau intérieur (106, 206) et le boîtier (102), la chaîne de fabrication comprenant une conduite d'amenée intérieure, un distributeur de feuille, une station de moulage (322) avec un moule, un extendeur (324), une unité de refroidissement (326, 328), une unité de coupage (330) et des moyens de transportation (332), et un distributeur (320) pour distribuer le matériau d'isolation (104) à l'état liquide, **caractérisée en ce que** ladite chaîne de fabrication en outre comprend un dispositif de plaque élevée (400) placé dans le moule d'une station de moulage, la plaque élevée ayant une pente dirigée vers le bas dans le moule et étant arrangée si bien que l'extrémité haute de la plaque élevée est placée dans ou au niveau de l'extrémité d'entrée du moule, le dispositif de plaque élevée (400) comprenant des parois latérales.

7. Chaîne de fabrication selon l'une quelconque des revendication 6, dans lequel ledit dispositif de plaque élevée (400) comprend une partie horizontale qui fournit une distribution régulière du matériau d'isolation (104) à l'état liquide et ensuite une expansion régulière de celui-ci.
